# EUROPEAN PATENT SPECIFICATION

(11) **EP 0 522 683 B1**
(45) Date of publication and mention of the grant of the patent: **22.03.2000**
(21) Application number: 92303782.4
(22) Date of filing: 27.04.1992
(51) Int. Cl.: G06F 15/16, G06F 9/46

(54) **Routing of messages in a data processing system**
Weiterleiten von Nachrichten in einem Datenverarbeitungssystem
Routage de messages dans un système de traitement de données

(30) Priority: 10.07.1991 GB 9114911
(43) Date of publication of application: 13.01.1993
(73) Proprietor: INTERNATIONAL COMPUTERS LIMITED, Putney, London, SW15 1SW (GB)
(72) Inventor: McVitie, David Glen, Congleton, Cheshire CW12 1QF (GB); Messham, David Kingsley, Congleton, Cheshire CW12 4JA (GB)
(74) Representative: Guyatt, Derek Charles

(56) References cited:
- IBM TECHNICAL DISCLOSURE BULLETIN. vol. 32, no. 11 , April 1990 , NEW YORK US pages 370 - 372 'Routing of incoming calls in an X.25 system'
- IBM TECHNICAL DISCLOSURE BULLETIN. vol. 32, no. 4B , September 1989 , NEW YORK US pages 94 - 95 'Routing incoming calls to X25 applications'
- IBM TECHNICAL DISCLOSURE BULLETIN. vol. 31, no. 1 , June 1988 , NEW YORK US pages 423 - 428 'Multiple CPU support for a virtual machine operating system'
- IBM TECHNICAL DISCLOSURE BULLETIN. vol. 33, no. 12 , May 1991 , NEW YORK US pages 349 - 352 'Network control unit'
- FUTURE GENERATIONS COMPUTER SYSTEMS vol. 4, no. 2 , September 1988 , AMSTERDAM NL pages 81 - 93 J. GARCIA-LUNA-ACEVES 'Routing management in very large-scale networks'

## Description

### Background to the Invention

This invention relates to data processing systems and more particularly is concerned with routing of messages between applications (ie applications programs) in such a system.

There is a general requirement for applications to communicate with each other by sending messages. The communication may be made directly, when the applications are both running within the same environment, or may be made indirectly, by way of a series of routing points, when the applications are running in different environments such as on different host processors. The means for providing the routing should be flexible, to allow it to be used in different contexts, and should present a low overhead in terms of the amount of processing time required to route the messages.

IBM Technical Disclosure Bulletin Vol. 32, No. 11, April 1990, pages 370 - 372, "Routing of incoming calls in an X.25 system" describes the use of a router table which includes fields for calling address, called sub address, call user data, priority, action and UserID; the preamble of claim 1 bases on this reference.

J. Garcia-Luna-Aceves, "Routing Management in very large scale networks", Future Generations Computer Systems, Vol. 4, No. 2, September 1988, pages 81 - 93, describes a hierarchical addressing mechanism with routing tables.

However, neither of these two prior proposals describes a routing scheme with the desired characteristics as described above.

The object of the present invention is to provide a data processing system with a means for routing which achieves these requirements.

### Summary of the Invention

According to the invention, there is provided a data processing system in which data can be routed by way of a network of routing points, wherein each routing point receives input connection data from an initiator or a preceding routing point, makes a decision concerning the destination and produces output connection data for passing to a subsequent routing point or final destination, wherein each routing point has a routing table associated with it, each routing table comprising an unordered set of entries, and wherein each routing table entry comprises:
a) a matching rule for determining which data elements must be present in the input connection data in order to allow use of this entry for routing,
b) a context rule for determining whether the routing point from which the input connection data is received is permitted to use this entry,
c) a destination field, indicating where the data is to be routed to, and
d) a generation rule, indicating the way in which the output connection data from this routing point is to be derived from the input connection data.

### Brief Description of the Drawings

Figure 1 is a schematic block diagram showing a distributed data processing system in accordance with the invention.
Figure 2 is a flow chart showing the operation of an application dialogue handler (ADH) in the system.

### Description of an Embodiment of the Invention

One data processing system in accordance with the invention will now be described by way of example with reference to the accompanying drawings.

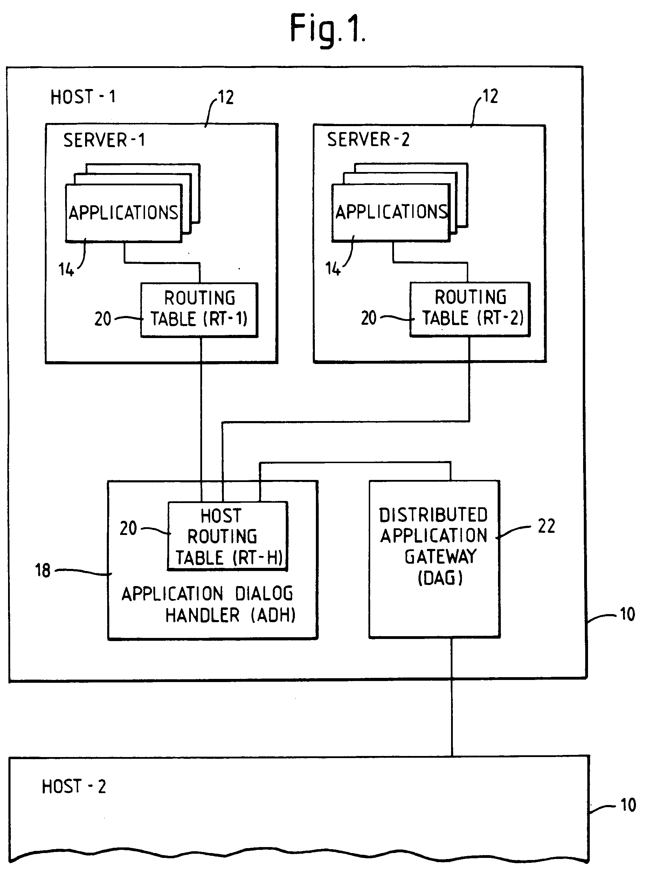

Referring to Figure 1, the data processing system comprises a number of host computers 10 (HOST-1, HOST-2). Each host runs a multi-processing operating system which supports a number of virtual machines (VM). For example, the host computers may be ICL series 39 computers, running under the VME operating system

Each host computer 10 runs a number of servers 12. A server comprises a collection of application program instances 14 for providing some specified service and with a defined interface with the outside world. Each of the applications may conveniently run within its own separate VM.

Each host 10 also includes an application dialogue handler (ADH) 18, which runs its own separate VM within the host. As will be described, the ADH handles communication between applications, including communications between applications in the same server, communications between applications in different servers in the same host, and communications between applications in different hosts. The ADH uses a set of routing tables (RT) 20, one for each server in the host, and one for the host itself.

Each host 10 also includes at least one distributed application gateway (DAG 22). This is a program which runs in a separate VM within the host, and handles communication with other hosts, by way of corresponding gateways in the other hosts.

Routing of messages between applications is performed using data items referred to as connection data (CD) elements. A CD element may comprise, for example, a local name for the required destination application, or a globally valid name for the destination. It may also include other information relevant to the connection such as security, performance or cost parameters.

When an application requires to communicate with another application, it generates a CD-input, consisting of an ordered sequence of one or more CD elements, defining the required connection. The CD-input is then used by the ADH to access the appropriate routing table RT, to determine how the routing is to be performed.

Each routing table RT consists of an unordered set of entries. Each entry consists of four fields: CD-required, context, destination and CD-generated. The contents of these fields are as follows:
CD required : this is an ordered sequence of CD-elements specifying data that must be present in a CD-input before this entry can be used. In other words, a routing table entry can be used only if all the CD elements in the CD-required field are equal to the corresponding elements in the CD-input (i.e. the CD-input starts with CD-required).
Context : this is a list of the names of the users that are permitted to use this entry. The users may be applications, or may be other routing tables.
Destination : this indicates the destination to which the message is to be routed. It may be the ultimate destination, or may be an intermediate destination in the case where the message has to be routed by way of a number of intermediate routing points. The destination field may consist of one of the following:
   1) The name of another routing table.
   2) A listener name, ie the name by which a VM can accept messages.
   3) Null. In this case, the routing table entry is intended only to translate the CD, without actually making a connection.
CD-generated - this is a rule for generating a CD-output which can be partially new and partially derived from the CD-input. The CD-output consists of a sequence of one or more new CD-elements, followed by all, or a specified portion of the CD-input. The CD-output is used as the CD-input for the next stage (if any) of the routing.

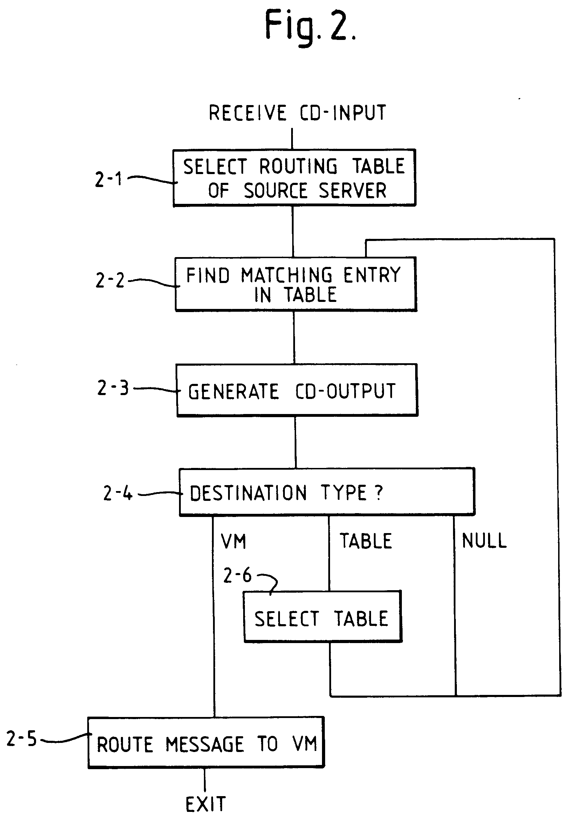

The operation of the ADH to route a message from a source application will now be described with reference to Figure 2.

It is assumed that the message has connection data CD-input associated with it, identifying the intended destination application.
(2-1) The ADH first accesses the routing table RT of the server in which the source application resides.
(2-2) The ADH then searches the table to find an entry whose CD-required field matches the CD-input and whose context field indicates that access to this entry is permitted.
(2-3) The ADH then uses the CD-generated field of the table entry to generate a CD-output value.
(2-4) The ADH then examines the destination field of the table entry, to determine the type of destination specified by that field (routing table, VM or null). If the destination field is null, the ADH returns to step (2-2) above and the routing table is accessed again, using the generated CD-output as the new CD-input.
(2-5) If the destination field specifies the name of a VM, the message and its associated connection data (CD-output) are routed to that VM, and the operation of the ADH is complete.
(2-6) If the destination field specifies another routing table, this new routing table is selected, and the ADH returns to step (2-2) above, with the generated CD-output as the new CD-input.

It can be seen that the loop, comprising the steps (2-2), (2-3) and (2-4) is repeated until the destination is found to be a VM. In this way, the message is routed through a series of routing points, until it eventually reaches the required destination VM.

An example will now be described to illustrate the contents of the routing tables and the operation of the ADH.

In this example, it is assumed that there are two servers (SERVER-1 and SERVER-2) running on HOST-1.

SERVER-1 supports two transaction processing applications AT-11 and AT-12 which run in respective virtual machines AVM-1 and CVM-1 within the host. SERVER-2 supports a further transaction processing application AT-13 which runs in a virtual machine CVM-2.

It is assumed that the service AT-11 requires to access application AT-12 (in the same server), application AT-13 (in a different server in the same host) and application AT-14 which runs in HOST-2. Also, it is assumed that the application AT-12 is to be accessed from an application in HOST-2.

Each application refers to other applications by means of character strings which represent local names for the applications. In this example, AT-11 refers to application AT-12 by the string STRING-5, to AT-13 by STRING-6, and to AT-14 by STRING-7.

The applications AT-12, AT-13 and AT-14 provide functions which are referred to by the function identifiers TPSUT-3, TPSUT-4 and TPSUT-5 respectively. (It should be noted that all the names and identifiers used in this example are arbitrary and are for illustration purposes only).

To achieve these desired connections, the routing tables are set up as follows:

| RT-1 : Routing Table for SERVER-1 | | | |
|---|---|---|---|
| CD required | Context | Destination | CD-generated |
| STRING-5 | User/:AVM-1 | Null | AT-12 & TPSUT-3 |
| STRING-6 | User/:AVM-1 | Null | AT-13 & TPSUT-4 |
| STRING-7 | User/:AVM-1 | Null | AT-14 & TPSUT-5 |
| AT-12 & TPSUT-3 | RT-H & User/:AVM-1 | Listen/TPMS-1 in user/:CVM-1 | MT-4 |
| AT-13 | User/:AVM-1 | RT-H | CD-Input |
| AT-14 | User/:AVM-1 | RT-H | CD-Input |

| RT-H : Routing Table for Host | | | |
|---|---|---|---|
| CD required | Context | Destination | CD-generated |
| AT-13 | RT-1 | RT-2 | CD-INPUT |
| AT-14 | RT-1 | Listen/DAG-6 in user/:DAGUSER-6 | CH-name & CD-Input |
| AT-12 | User/:DAGUSER-6 | RT-1 | CD-Input |

| RT-2 : Routing Table for SERVER-2 | | | |
|---|---|---|---|
| CD required | Context | Destination | CD-generated |
| AT-13 & TPSUT-4 | RT-H | Listen/TPMS-2 in user/CVM-2 | MT-5 |

Examples of the way in which these tables are used to form connections will now be described.

### Connection to an Application in the Same Server

Consider the case where application AT-11 requires to connect to the application AT-12, which resides in the same server.

The application AT-11 sends a CD-input to the ADH, containing the local name STRING-5, by which it identifies the intended destination application AT-12.

It can be seen from the above tables that the CD-input and the source match the CD-required and context fields of the first entry in the routing table for SERVER-1, and hence this entry is selected. The destination field of this entry is null, which indicates that this is a translation operation, rather than an actual routing step. The CD generated field of this entry contains the value AT-12 & TPSUT-3 which are used to provide a CD-output.

This CD-output is then used as a new CD-input to access the routing tables again. This time, the fourth entry in RT-1 is selected. The destination field for this entry indicates the virtual machine (CVM-1) in which the destination application resides, and the local name (TPMS-1) of that application. The CD-generated field is a value passed to the destination application and understood by it.

### Connection to an Application in the Same Host

The case will now be considered where the application AT-11 requires to connect to the application AT-13, which resides in a different server, but in the same host.

The application AT-11 sends a CD-input to the ADH, consisting of the local name STRING-6, by which it identifies the required destination. This selects the second entry in table RT-1, which provides a translation of the name into the required global name AT-13 and function identifier TPSUT-4.

The CD-output is then used as a new CD-input to access the table again. This time, the fifth entry in RT-1 is selected. The destination field of this entry is RT-H, which indicates that the next stage of the routing uses the host routing table. The CD-generated field contains a code "CD-input" which indicates that the CD-output for this stage is identical to the CD-input.

The routing tables are accessed again and this time the first entry in the host routing table is selected. The destination field of this entry indicates that the next stage of the routing uses the SERVER-2 routing table. The CD-generated field indicates that the CD-output for this stage is again equal to the CD-input.

The routing tables are accessed once more, and this time the first entry in the SERVER-2 routing table is selected. The destination field for this entry indicates the virtual machine (CVM-2) in which the destination application resides, and the local name (TPMS-2) of that application. The CD-generated field contains a value passed to the destination application and understood by it.

### Connection to an Application in a Remote Host

The case will now be considered where the application AT-11 requires to connect to an application AT-14 which resides in a remote host, e.g. HOST-2.

The application AT-11 sends a CD-input to the ADH, consisting of the local name STRING-7 by which it identifies the required destination. This selects the third entry in the table RT-1, which provides a translation of the name into the required global name AT-14 and function identifier TPSUT-5.

The CD-output is then used as a new CD-input to access the table again. This time, the sixth entry in RT-1 is selected.

The destination field of this entry is RT-H which indicates that the next stage of the routing uses the host routing table, and the CD-generated field indicates that the CD-output for this stage is identical to the CD-input.

The routing tables are accessed again, and this time the second entry in the host routing table is selected. The destination field of this entry indicates that the destination is in virtual machine DAGUSER-6 which runs the distributed application gateway program DAG-6, providing access to the remote host. The CD-generated field contains a CH-name which is the catalogue hierarchic name of a remote service that DAG can use to reach the required host for AT-14.

The message is then sent to the remote host by the gateway.

### Connection to an Application from a Remote Host

Consider now the case where an application in a remote host (e.g. HOST-2) requires to access the application AT-12. The application will go through the procedure as described in the previous section, to send the message from its distributed application gateway (DAG) to the DAG in HOST-1. This message will have a CD-input value AT-12 & TPSUT-3.

The DAG sends the CD-input of the message to the ADH. This selects the third entry in the host routing table. The destination field of this entry is RT-1 which indicates that the next stage of the routing uses the SERVER-1 routing table. The CD-generated field indicates that the CD-output for this stage is identical to the CD-input.

The routing tables are accessed once more, and this time the fourth entry in the SERVER-1 routing table is selected. This directs the message to the virtual machine CVM-1 containing the required destination application.

## Claims

1. A data processing system in which data can be routed by way of a network of routing points (12, 18), wherein each routing point receives input connection data from an initiator (14) or a preceding routing point, makes a decision concerning the destination and produces output connection data for passing to a subsequent routing point or final destination (14), where each routing point has a routing table (20) associated with it, each routing table comprising an unordered set of entries, and wherein each routing table entry comprises:
a) a matching rule for determining which data elements must be present in the input connection data in order to allow use of this entry for routing,
b) a context rule for determining whether the routing point from which the input connection data is received is permitted to use this entry, and
c) a destination field, indicating where the data is to be routed to, characterized by
d) a generation rule, indicating the way in which the output connection data from this routing point is to be derived from the input connection data.

2. A data processing system according to Claim 1 wherein the data processing system has an operating system supporting virtual machines or processes, and wherein each of said routing points comprises at least one virtual machine or process.

3. A system according to either preceding claim wherein the data processing system comprises at least two host computers (10) and wherein the routing points include a gateway means (22) for providing a connection between the host computers.

4. A system according to any preceding claim wherein said matching rule comprises an ordered list of connection data elements.

5. A system according to any preceding claim wherein said generation rule specifies that the output connection data consists of a specified sequence of data elements optionally followed by a specified portion of the input connection data.

6. A method of routing data in a data processing system comprising a network of routing points, wherein each routing point receives input connection data from an initiator or preceding routing point and passes output connection data to a subsequent routing point or final destination, the method comprising providing a routing table at each routing point, each routing table comprising an unordered set of entries, each entry comprising a matching rule, a context rule, a generation rule, and a destination field, the method also comprising performing the following steps at each of a succession of routing points:
(a) searching the routing table at that routing point for an entry having a matching rule that matches the input connection data and a context rule that indicates that the routing point or initiator from which the input connection data is received is permitted to use this entry;
b) using the generation rule in that entry to derive output connection data from the input connection data, and
c) using the destination field in that entry to select the next routing point or final destination to which the data is to be routed.

7. A method according to Claim 6 wherein, when the destination field has a null value, the routing table entry is used only to translate the input connection data to the output connection data, without routing the data to the next connection point.

## Patentansprüche

1. Datenverarbeitungssystem, bei dem Daten über ein Netzwerk von Leitweg-Punkten (12, 18) geleitet werden können, wobei jeder Leitweg-Punkt Eingangsverbindungs-Daten von einem Auslöser (14) oder einem vorausgehenden Leitweg-Punkt aufnimmt, eine Entscheidung über die Bestimmung trifft und Ausgangsverbindungs-Daten an einen nachfolgenden Leitweg-Punkt oder eine End-Bestimmung (14) erzeugt, wobei jedem Leitweg-Punkt eine Leitweg-Tabelle (20) zugeordnet ist, jede Leitweg-Tabelle einen ungeordneten Satz von Eingängen aufweist, und jeder Leitweg-Tabelleneintrag besitzt:
a) eine Anpassungsregel zum Bestimmen, welche Datenelemente in den Eingangsverbindungs-Daten vorhanden sein müssen, damit die Verwendung dieses Eintrags für den Leitweg benutzt werden kann,
b) eine Kontext-Regel zur Bestimmung, ob der Leitweg-Punkt, von dem die Eingangsverbindungs-Daten empfangen werden, berechtigt ist, diesen Eintrag zu benutzen, und
c) ein Bestimmungsfeld, das angibt, wohin die Daten geleitet werden sollen,
**gekennzeichnet durch**
d) eine Erzeugungs-Regel, die den Weg anzeigt, in dem die Ausgangsverbindungs-Daten von diesem Leitweg-Punkt von den Eingangsverbindungs -Daten abgeleitet werden sollen.

2. Datenverarbeitungssystem nach Anspruch 1, bei dem das Datenverarbeitungssystem ein Betriebssystem aufweist, das virtuelle Maschinen oder Vorgänge unterstützt, und bei dem jeder der Leitweg-Punkte mindestens eine virtuelle Maschine oder einen virtuellen Vorgang aufweist.

3. System nach Anspruch 1 oder 2, bei dem das Datenverarbeitungssystem mindestens zwei Host-Computer (10) besitzt, und die Leitweg-Punkte eine Torweg-Vorrichtung (22) besitzen, um eine Verbindung zwischen den Host-Computern herzustellen.

4. System nach einem der vorausgehenden Ansprüche 1 - 3, bei dem die Anpassungs-Regel eine geordnete Liste von Verbindungsdaten-Elementen aufweist.

5. System nach einem der vorausgehenden Ansprüche 1 - 4, bei dem die Erzeugungs-Regel spezifiziert, daß die Ausgangsverbindungs-Daten aus einer spezifizierten Folge von Datenelementen bestehen, an die sich wahlweise ein spezifizierter Teil der Eingangsverbindungs-Daten anschließt.

6. Verfahren zum Leiten von Daten in einem Datenverarbeitungssystem, mit einem Netzwerk von Leitweg-Punkten, wobei jeder Leitweg-Punkt Eingangsverbindungs-Daten von einem Auslöser oder einem vorausgehenden Leitweg-Punkt empfängt und Ausgangsverbindungs-Daten an einen nachfolgenden Leitweg-Punkt oder eine Endbestimmung führt, wobei das Verfahren die Bereitstellung einer Leitweg-Tabelle an jedem Leitweg-Punkt ergibt, jede Leitweg-Tabelle einen ungeordneten Satz von Einträgen besitzt, jeder Eintrag eine Anpassungs-Regel, eine Kontext-Regel, eine Erzeugungs-Regel und ein Bestimmungsfeld umfaßt, und das Verfahren ferner die Durchführung der folgenden Schritte an jeder einer Folge von Leitweg-Punkten einschließt:
(a) Durchsuchen der Leitweg-Tabelle an diesem Leitweg-Punkt für einen Eintrag mit einer Anpassungs-Regel, die die Eingangsverbindungs-Daten und eine Kontext-Regel anpaßt, die angibt, daß der Leitweg-Punkt oder der Auslöser, von dem die Eingangsverbindungs-Daten aufgenommen wird, zur Verwendung dieses Eintrags berechtigt ist,
(b) Verwenden der Erzeugungs-Regel in diesem Eintrag, um Ausgangsverbin dungs -Daten von den Eingangsverbindungs-Daten abzuleiten, und
(c) Verwenden des Bestimmungsfeldes in diesem Eintrag, um den nächsten Leitweg-Punkt oder die Endbestimmung auszuwählen, an die die Daten geleitet werden sollen.

7. Verfahren nach Anspruch 6, bei dem dann, wenndas Bestimmungsfeld einen Nullwert hat, der Leitweg-Tabelleneintrag nur zur Umsetzung der Eingangsverbindungs-Daten in die Ausgangsverbindungs-Daten ohne Leitwegführung der Daten zur nächsten Verbindungsstelle aufweist.

## Revendications

1. Système de traitement de données dans lequel des données peuvent être acheminées par l'intermédiaire d'un réseau de points d'acheminement (12, 18), où chaque élément d'acheminement reçoit des données de connexion d'entrée de la part d'un élément initiateur (14) ou d'un point d'acheminement précédent, prend une décision concernant la destination et produit des données de connexion de sortie pour les transmettre à un point d'acheminement ultérieur ou à la destination finale (14), où chaque point d'acheminement possède une table d'acheminement (20) qui lui est associée, chaque table d'acheminement comprenant un ensemble non ordonné d'entrées, et où chaque entrée de table d'acheminement comprend :
a) une règle d'accord servant à déterminer quels éléments de données doivent être présents dans les données de connexion d'entrée pour permettre l'utilisation de cette entrée pour l'acheminement,
b) une règle de contexte servant à déterminer si le point d'acheminement de la part duquel les données de connexion d'entrée sont reçues est autorisé à utiliser cette entrée, et
c) une zone de destination, indiquant où les données doivent être acheminées, caractérisé par
d) une règle de production, indiquant la manière suivant laquelle les données de connexion de sortie de ce point d'acheminement doivent être obtenues à partir des données de connexion d'entrée.

2. Système de traitement de données selon la revendication 1, où le système de traitement de données possède un système d'exploitation qui fait fonctionner des machines virtuelles ou des traitements, et où chacun desdits points d'acheminement comprend au moins une machine virtuelle ou un traitement.

3. Système selon l'une quelconque des revendications précédentes, où le système de traitement de données comprend au moins deux ordinateurs principaux (10) et où les points d'acheminement comportent un moyen formant une passerelle (22) qui sert à assurer la connexion entre les ordinateurs principaux.

4. Système selon l'une quelconque des revendications précédentes, où ladite règle d'accord comprend une liste ordonnée d'éléments de données de connexion.

5. Système selon l'une quelconque des revendications précédentes, où ladite règle de production spécifie que les données de connexion de sortie consistent en une séquence spécifiée d'éléments de données qui sont éventuellement suivis par une partie spécifiée des données de connexion d'entrée.

6. Procédé d'acheminement de données dans un système de traitement de données comprenant un réseau de points d'acheminement, où chaque point d'acheminement reçoit des données de connexion d'entrée de la part d'un élément initiateur ou d'un point d'acheminement précédent et transmet des données de connexion de sortie à un point d'acheminement suivant ou à la destination finale, le procédé comprenant l'opération qui consiste à fournir une table d'acheminement en chaque point d'acheminement, chaque table d'acheminement comprenant un ensemble non ordonnée d'entrées, chaque entrée comprenant une règle d'accord, une règle de contexte, une règle de production et une zone de destination, le procédé comprenant également l'exécution des opérations suivantes à chaque point d'une succession de points d'acheminement :
a) chercher dans la table d'acheminement relative à chaque point d'acheminement une entrée ayant une règle d'accord qui s'accorde avec les données de connexion d'entrée et une règle de contexte qui indique que le point d'acheminement ou l'élément initiateur en provenance duquel les données de connexion sont reçues est autorisé à utiliser cette entrée;
b) utiliser la règle de production se trouvant dans cette entrée pour obtenir des données de connexion de sortie à partir des données de connexion d'entrée, et
c) utiliser la zone de destination de cette entrée pour sélectionner le point d'acheminement suivant ou la destination finale où les données doivent être acheminées.

7. Procédé selon la revendication 6, où, lorsque la zone de destination possède une valeur zéro, l'entrée de la table d'acheminement n'est utilisée que pour transposer les données de connexion d'entrée en les données de connexion de sortie, sans qu'il y ait acheminement des données au point de connexion suivant.
